# Europäisches Patentamt

# European Patent Office

# Office européen des brevets

(19)

(11) Veröffentlichungsnummer: **0 175 108**
**B1**

(12)

# EUROPÄISCHE PATENTSCHRIFT

(45) Veröffentlichungstag der Patentschrift:
02.11.88

(21) Anmeldenummer: **85109657.8**

(22) Anmeldetag: **01.08.85**

(51) Int. Cl.⁴: **B 60 G 17/04, B 61 F 5/10**

(54) Gasfederung für Fahrzeuge, insbesondere für Schienenfahrzeuge.

(30) Priorität: **13.09.84 DE 3433691**

(43) Veröffentlichungstag der Anmeldung:
**26.03.86 Patentblatt 86/13**

(45) Bekanntmachung des Hinweises auf die Patenterteilung:
**02.11.88 Patentblatt 88/44**

(84) Benannte Vertragsstaaten:
**AT CH DE FR IT LI**

(56) Entgegenhaltungen:
**EP-A-0 099 597**
**AT-B-300 025**
**CH-A-543 987**
**DE-B-1 088 086**
**US-A-2 115 159**
**US-A-2 505 256**
**US-A-2 784 978**

(73) Patentinhaber: **KNORR- BREMSE AG, Moosacher Strasse 80 Postfach 401060, D-8000 München 40 (DE)**
Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Stäuble, Georg, Zittauer Strasse 20, D-8000 München 50 (DE)**
Erfinder: **Wieser, Tiberius, Riesstrasse 82, D-8000 München 50 (DE)**
Erfinder: **Bucholz, Karl- Heinz, Kapruner Strasse 30, D-8500 Nürnberg 50 (DE)**
Erfinder: **Mohácsi, Sándor, Dr., Kloster- Ebrach- Strasse 44b, D-8500 Nürnberg 60 (DE)**

## Beschreibung

Die Erfindung betrifft eine Gasfederung nach dem Gattungsbegriff des Patentanspruches 1.

Bei Schienenfahrzeugen ist es bekannt, zwischen Laufwerk und Fahrzeugaufbau Gasfedern, so in Form von Federbälgen vorzusehen. Die Federbälge sind hierbei im allgemeinen quer zur Fahrzeuglängsrichtung bzw. -fahrtrichtung paarweise oder in paarweisen Gruppen angeordnet, d. h., daß jeweils einem Federbalg an einer Längsseite des Schienenfahrzeugs ein Federbalg an der entgegengesetzten Längsseite entspricht.

Bei Federbalg-Anordnungen der bekannten Art sind Ventileinrichtungen (DE-C-1 088 086) bekannt, mit welchen eine Stabilisierung des Fahrzeuges gegen das Wanken des Wagenkastens um seine Längsachse erreicht wird. Derartige Ventileinrichtungen sind als doppelt wirkende, einstellbare Überdruckventile ausgebildet, welche von einer voreingestellten Druckdifferenz zwischen den Gasfedern bzw. Gasfedergruppen ab diese miteinander verbindet. Ein plötzlicher Druckabbau in einem der Federbälge hat zur Folge, daß der Druck im jeweils anderen Federbalg gleichfalls reduziert wird, indem ein Druckausgleich zwischen den Federbälgen vorgenommen wird. Den verwendeten Überdruckventilen ist es eigen, daß sie mit einer gewissen Druckdifferez arbeiten, da sie mit einer in Schließrichtung wirkenden Druckfeder von bestimmter Federkraft ausgestattet sind. Bei einem Platzen eines der Federbälge oder einer der Federbalggruppen kann es infolge des Differenzdruckverhaltens, also infolge der Existenz eines Restdruckes in einem der Federbälge, dennoch zu Problemen unzureichender Stabilisierung des Fahrzeugaufbaues kommen. Sollte der Druck in einem der Federbälge infolge des Platzens auf den Wert Null absinken, dann ist es unerwünscht, wenn im jeweils anderen Federbalg ein derartiger Restdruck verbleibt, welcher zur unstabilen Lage des Wagenaufbaues beitragen kann. Dieselben Nachteile ergeben sich naturgemäß dann, wenn zwar kein Platzen des Federbalges vorliegt, jedoch ein plötzliches Absinken auf einen sehr geringen Minimaldruckwert.

Davon ausgehend besteht die Aufgabe der Erfindung darin, eine Gasfederung der gattungsgemässen Art so auszubilden, daß die Stabilisierungsprobleme hervorrufenden Druckeingenschaften von Ventilen bekannter Art vermieden werden können. Es soll unter Zuhilfenahme konstruktiv einfacher Mittel möglich sein, die beiden Federbälge ohne verbleibende Druckdifferenz auf einen gewissen Druck einstellen bzw. vollständig entlüften zu können, wenn ein vorbestimmter Minimaldruck erreicht ist oder das Platzen eines der Federbälge vorliegt.

Zur Lösung dieser Aufgabe dienen die Merkmale nach dem Kennzeichnungsteil des Patentanspuches 1.

Die die beiden Federbälge miteinander verbindende Ventileinrichtung, welche als Überströmventil zwischen den Federbälgen bezeichnet werden kann, ist mit einer baulich einfachen Vorrichtung versehen, welche das Restdruckverhalten ausschaltet, da unterhalb eines beliebig vorherbestimmbaren Druckes d. h. bei Erreichen eines Schaltdruckes, die Kraft einer Feder zur Wirkung kommt, welche die für das Restdruckverhalten verantwortliche Druckfeder des Rückschlagventils in ihrer Wirkung ausschaltet. Platzt einer der Federbälge oder reduziert sich sein Druck auf einen äußert kleinen Minimalwert, dann wird eines der Rückschlagventile außer Funktion gesetzt, derart, daß das Ventil ständig in geöffneter Lage gehalten wird und die Verbindung zwischen den beiden Federbälgen herbeigeführt ist. Der im Moment des Platzens eines der Federbälge intakte andere Federbalg wird folglich durch den geplatzten Federbalg hindurch sofort entlüftet.

Die durch einen Schaltdruck d. h. bei Absenken des Druckes eines der Federbälge zur Wirkung kommende Federeinrichtung kann auch bei einer Ventilanordnung verwendet werden, welche aus zwei druckentlasteten Sperrventilen besteht, d. h. aus zwei Ventilanordnungen mit entlasteten Ventilkörpern, welche durch Druckunterschiede zu beiden Seiten des Ventilskörpers, d. h. bei einem Differenzdruck, nicht öffnen. Hierbei kann zusätzlich zu dem aus den beiden Sperrventilen mit der Feder-Hilfseinrichtung gebildeten Überströmventil ein Überströmventil bekannter Art vorgesehen sein, d. h. ein Überströmventil mit zwei Rückschlagventilen.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Fig. 1       ist eine schematische Ansicht einer Gasfederung mit einer Überströmventileinrichtung nach der Erfindung;

Fig. 2       ist eine der Fig. 1 vergleichbare Ansicht bei Verwendung eines Überströmventils mit zwei druckentlasteten Sperrventilen.

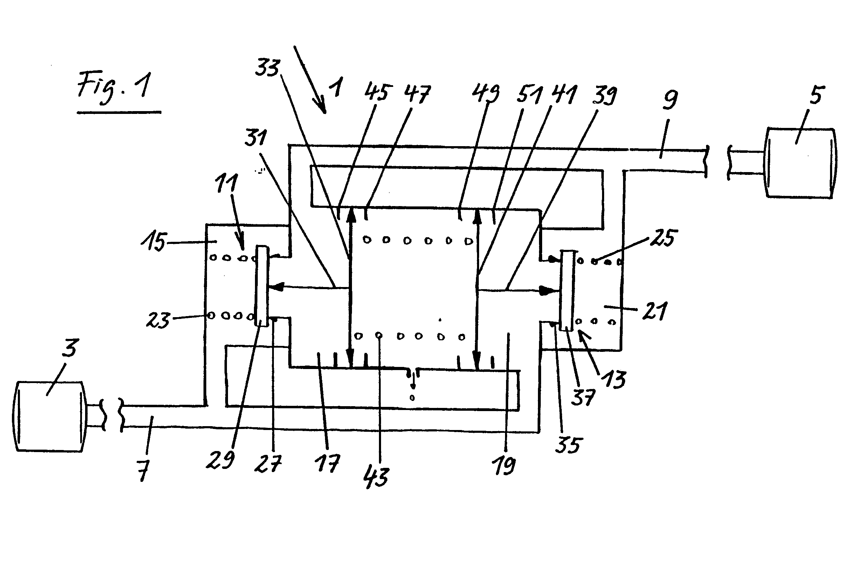

In Fig. 1 der Zeichnung ist ein Überströmventil 1 dargestellt, welches sich in der Verbindung zwischen zwei schematisch wiedergegebenen Federbälgen 3 und 5 befindet. Die Federbälge 3 und 5 sind in an sich bekannter Weise quer zur Fahrzeugrichtung einander gegenüberliegend vorgesehen, wobei sie zwischen dem Fahrzeugaufbau, z. B. in Form eines Wagenkastens, und dem Laufwerk eines Schienenfahrzeugs wirken. Die beiden Federbälge sind über Leitungen 7 und 9 mit dem Überströmventil 1 verbunden; die Leitungen 7 und 9 können in gleichfalls bekannter Weise durch ein Rahmenteil des Schienenfahrzeugs gebildet sein.

Das Überströmventil 1 ist mit zwei Rückschlagventilen 11 und 13 versehen. Das in Fig. 1 der Zeichnung linksseitig wiedergegebene Rückschlagventil 11 wirkt zwischen zwei Druckräumen 15 und 17, von welchen der Druckraum 15 mit der Leitung 7 verbunden ist, während der Druckraum 17 mit der Leitung 9 in Verbindung steht. Das rechtsseitig wiedergegebene Rückschlagventil 13 wird zwischen zwei Druckräumen 19 und 21, von welchen der Druckraum 19 mit der Leitung 7 und demnach mit dem Druckraum 15 in Verbindung steht, während der Druckraum 21 mit der Leitung 9 und demnach auch mit dem Druckraum 17 in Verbindung steht. Das Rückschlagventil 11 als auch das Rückschlagventil 13 kann in einfachster Form ausgebildet sein, d. h. das Rückschlagventil 11 besitzt eine Druckfeder 23, welche einen Ventilteller gegen einen Ventilsitz anzudrücken vermag, während das Rückschlagventil 13 gleichfalls mit einer Druckfeder 25 versehen ist, welche einen Ventilteller gegen einen Ventilsitz andrückt. Die beiden Rückschlagventile 11 und 13 arbeiten nach dem an sich bekannten Prinzip von Differenzdruckventilen. Besteht z. B. zwischen dem Druckraum 17 und dem Druckraum 15 ein Druckunterschied von 5 bar, derart, daß der Druck im Druckraum 17 um z. B. 5 bar höher liegt als der Druck im Druckraum 15, dann öffnet das Rückschlagventil 11 gegen die Kraft der Druckfeder 23 und es findet ein Druckausgleich zwischen den Druckräumen 17 und 15 und demnach zwischen den Federbälgen 5 und 3 statt. Gleiches gilt für das Rückschlagventil 13. Bei beiden Rückschlagventilen würde sich ohne die nachfolgend beschriebene Einrichtung nach der Erfindung ein sogenanntes Restdruckverhalten einstellen, d. h. das Rückschlagventil 11 würde normalerweise bei einem Druckunterschied von z. B. 1,5 bar schließen, d. h. dann, wenn der Druck im Druckraum 17 um 1,5 bar höher liegt als der Druck im Druckraum 15, da der Ventilkörper des Rückschlagventils 11 mit einer vorbestimmten Kraft der Druckfeder 23 an seinen Ventilsitz angepreßt wird.

Gemäß der Erfindung ist eine Einrichtung vorgesehen, welche unterhalb eines vorbestimmten, einstellbaren Druckniveaus einen vollständigen Druckausgleich zwischen den Federbälgen 3 und 5 herbeizuführen vermag, d. h. sollte einer der Federbälge 3 und 5 platzen, dann wird der jeweils andere Federbalg durch den geplatzten Federbalg vollständig entlüftet. Gemäß Darstellung kann der gegenüber dem Ventilsitz 27 des Rückschlagventils 11 wirkende Ventilteller 29 durch einen Kolbenschaft 31 beaufschlagt werden, der mit einem Kolben 33 verbunden ist. In gleicher Weise kann auf den mit dem Ventilsitz 35 des Rückschlagventils 13 zusammenwirkenden Ventilteller 37 ein Kolbenschaft 39 einwirken, der mit einem Kolben 41 verbunden ist. Im dargestellten Ausführungsbeispiel wirkt eine gemeinsame Feder 43 auf die beiden Kolben 33 und 41 ein, wobei sich der Kolben 33 zwischen zwei Anschlägen 45 und 47 bewegen läßt, während sich der Kolben 41 zwischen zwei Anschlägen 49 und 51 bewegen läßt. Die Kraft der Feder 43 ist größer als diejenige der Druckfeder 23; in entsprechender Weise ist die Kraft der Feder 43 größer als diejenige der Druckfeder 25. Es besteht somit gleicher Aufbau und gleiche Wirkverbindung bezüglich der beiden Rückschlagventile 11 und 13.

Die Wirkungsweise des Überströmventils nach der Erfindung ist wie folgt:

Das Überströmventil arbeitet bis zu einem einstellbaren Druck von z. B. 1 bar in normaler Weise, d. h. daß die Rückschlagventile 11 und 13 bis zu einem einstellbaren Druck von 1 bar in einer der Leitungen 7 und 9 ohne die Zusatzfunktion der Kolben 33 und 41 arbeiten. Sinkt der Druck in einem der Druckräume 17 bzw. 19 folglich auf einen Wert von unter 1 bar ab, dann vermag die Kraft der Feder 43 die vom Druck erzeugte Gegenkraft zu überwinden, d. h., daß in diesem Fall der Kolben 33 gemäß Darstellung nach links gerichtet verschoben wird bzw. daß der Kolben 41 gemäß Darstellung nach rechts gerichtet verschoben wird. Oberhalb des Druckes von 1 bar werden folglich die beiden Kolben in Anlage an ihrem inneren Anschlag 47 bzw. 49 gehalten, so daß das Ende des jeweiligen Kolbenschafts 31 bzw. 39 einen Abstand vom zugewandten Ventilteller des Rückschlagventils besetzt. In dieser Relativlage arbeiten die Rückschlagventile, wie vorstehend bereits dargetan ist, in normaler Weise.

Es sei angenommen, daß der Druck in den beiden Federbälgen 3 und 5 z. B. 5 bar beträgt und daß der Federbalg 3 plötzlich platzt. Durch das Balgplatzen fällt der Druck innerhalb der Druckkammer 19 innerhalb kurzer Zeit auf einen Wert von unterhalb 1 bar ab; ist ein Wert von unterhalb 1 bar, der sogenannte Schaltdruck erreicht, dann vermag die Kraft der Feder 43 den Kolben 41 gemäß Darstellung nach rechts gerichtet zu verschieben. Der mit dem Kolben 41 verbundene Kolbenschaft 39 stößt nunmehr gegen den Ventilteller 37 und hebt in von seinem Ventilsitz 35 ab. Auf diese Weise ist die offene Verbindung zwischen dem geplatzten Federbalg 3 und dem Federbalg 5 hergestellt, so daß innerhalb sehr kurzer Zeit die vollständige Entlüftung des Federbalges 5 durch den Druckraum 21, den Druckraum 19, die Leitung 7 und den geplatzten Federbalg 3 hindurch erfolgt. Die Entlüftung erfolgt vollständig, also ohne das den Rückschlagventilen eigene Restdruckverhalten, da die Kraft der Feder 43 die Gegenkraft der Druckfeder 25 ausschaltet und der Ventilteller 37 dadurch ständig offengehalten ist.

Die beim Abheben des Ventiltellers 37 vom Ventilsitz 35 durch die Feder 43 zusätzlich zu überwindende Kraft, welche durch die Druckfeder 25 und den Druck im Druckraum 21 ausgeübt wird, wurde vorstehend als vernachlässigbar angesetzt d. h., daß die Verbindung über das Rückschlagventil 13 sofort hergestellt ist, wenn der Druck innerhalb des Druckraumes 19 auf den sogenannten Schaltdruck abfällt. Bei gewissen Druckvoraussetzungen und konstruktiven Gegebenheiten ist es natürlich auch möglich, daß zunächst im Rückschlagventil 11 ein Druckausgleich herkömmlicher Art stattfindet, bevor der Ventilteller 37 in vorstehend beschriebener Weise durch die nunmehr überwiegende Kraft der Feder 43 aufgestoßen wird.

Wenn der Kolben 41 mit seinem Kolbenschaft 39 den Ventilteller 37 abgehoben hat, dann stellt sich im Bereich des Rückschlagventils 11 ein vergleichbarer Zustand ein. Ist der Druck innerhalb des Druckraumes 17 infolge der vorstehend beschriebenen schnellen Entlüftung auf einen Wert von unterhalb 1 bar abgesunken, d. h. auf den Schaltdruck, dann tritt in vergleichbarer Weise der Kolben 33 in Wirkung, d. h. die Feder 43 vermag den Kolben 33 gemäß Darstellung nach links gerichtet zu verschieben, so daß der Kolbenschaft 31 den Ventilteller 29 von seinen Ventilsitz abhebt und in vergleichbarer Weise eine ständig offene Verbindung zwischen dem Druckraum 17 und dem Druckraum 15 herbeigeführt wird. Die vollständige Entlüftung des Federbalges 5 kann also nunmehr über beide Rückschlagventile 11 und 13 in Richtung des geplatzten Federbalges 3 stattfinden. Da die Drücke in beiden Federbälgen innerhalb kürzester Zeit einen vollständigen Ausgleich erfahren, ist die unerwünschte Gefahr einer Schieflage des Fahrzeugaufbaues, also die Gefahr der Instabilität des gesamten Schienenfahrzeuges, ausgeschlossen.

Die Erfindung ist nicht auf die dargestellte Ausführungsform der Kolben 33 und 41 mit der gemeinsamen Feder 43 beschränkt, obwohl eine derartige bauliche Integration erwünscht sein kann. Es ist somit auch möglich, daß das Überströmventil aus zwei räumlich getrennten Rückschlagventilen besteht, welchen jeweils gesondert ein Gehäuse mit einer einzelnen Feder zur Beaufschlagung der Kolben 33 bzw. 41 zugeordnet ist. In gleicher Weise ist es natürlich auch möglich, den die offene Verbindung zwischen den beiden Federbälgen auslösenden Schaltdruck variabel zu gestalten, derart, daß die Funktion der Kolben 33 bzw. 41 auch bereits bei einem Druck von höher als 1 bar eintreten kann. Prinzipiell erfolgt die Verbindung der beiden Federbälge nicht nur bei einem Platzen eines der Federbälge sondern auch bei einem vorgegebenen Minimaldruck, bei welchem die Gefahr der Schieflage eines Wagenkastens ausgeschaltet werden soll.

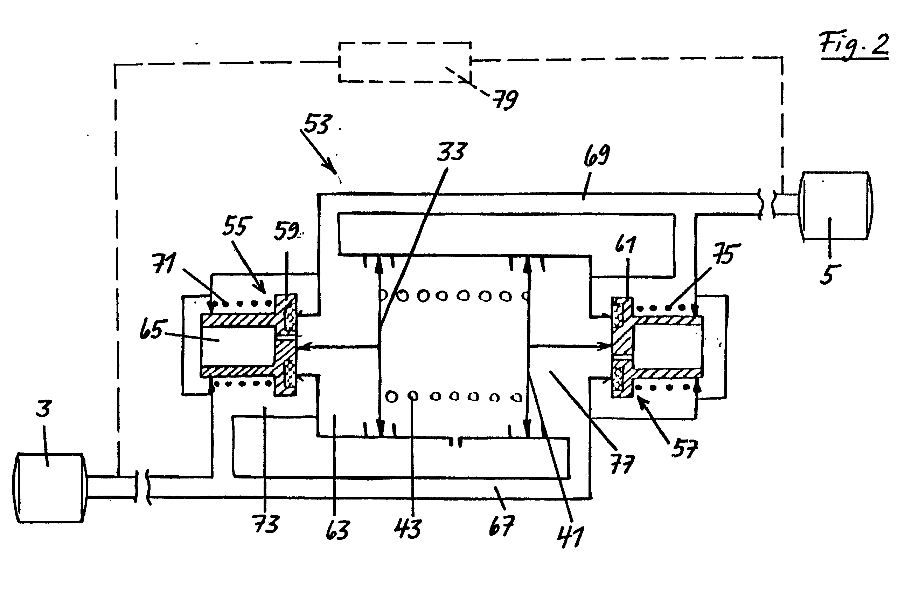

Das in Fig. 2 der Zeichnung dargestellte Überströmventil 53 gemäß einer weiteren Ausführungsform der Erfindung ist mit zwei entlasteten Sperrventilen 55 und 57 versehen. Die beiden Sperrventile sind druckentlastet, d. h. der Ventilkörper 59 bzw. 61 ist an seinen beiden Seiten mit gleichem Druck beaufschlagt. Der Druck des Druckraumes 63 besteht infolge der Bohrung innerhalb des Ventilkörpers 59 auch in Druckraum 65; da durch den gleichen Druck gleiche Flächen beaufschlagt sind, kann das Sperrventil 55 nicht als Druckdifferenzventil wirken, wenn ein Druckunterschied innerhalb der zu den Federbälgen 3 und 5 führenden Leitungen 67 und 69 herrschen sollte. Der Ventilkörper 59 wird einzig durch die Kraft der Feder 71 gegen seinen Ventilsitz angedrückt und sperrt hierbei die Verbindung zwischen dem Druckraum 63 und dem Druckraum 73. Analoges gilt für den Aufbau und die Wirkungsweise des Sperrventils 57.

Den Sperrventilen 55 und 57 ist in der Ausführungsform nach Fig. 1 vergleichbarer Weise eine Vorrichtung, bestehend aus Kolben 33 bzw. 41 und Kolbenschaft 31 bzw. 39 zugeordnet. Desgleichen ist analog der vorstehend beschriebenen Ausführungsform eine Feder 43 vorgesehen, welche die beiden Kolben 33 bzw. 41 in Richtung ihres zugeordneten Ventilkörpers zu drücken vermag. Nur mit Hilfe dieser Einrichtung ist es möglich, eines der beiden Sperrventile 55 bzw. 57, oder beide Sperrventile, zu öffnen. Sollte auch bei der Anordnung nach Fig. 2 ein Schaltdruck unterhalb von 1 bar gewählt sein, dann vermag die Kraft der Feder 43 die auf die Gegenseite des Kolbens 33 bzw. 41 einwirkende pneumatische Kraft bei Absinken desselben auf unterhalb 1 bar zu überwinden, so daß in diesem Fall der Kolbenschaft 31 oder 39 gegenüber dem zugewandten Ventilkörper 59 bzw. 61 zur Wirkung gelangt und ihn entgegen der Kraft der Feder 71 bzw. 75 zu verschieben vermag. Auch hierbei ist es erforderlich, daß die Feder 43 eine höhere Federkraft besitzt als die Feder 71 bzw. 75. Sollte demnach der mit der Leitung 67 in Verbindung stehende Federbalg 3 platzen, dann tritt wiederum die vorstehend unter Bezugnahme auf Fig. 1 beschriebene Wirkungsweise ein. Da der Druck innerhalb des Druckraumes 77 (welcher auch im Druckraum 73 herrscht) schnell unter den Wert von 1 bar absinkt, drückt die Feder 43 den Kolben 41 mit seinem Kolbenschaft 39 nach rechts gerichtet gegen den Ventilkörper 61 und hebt diesen gegen die Kraft der Feder 75 von seinem Ventilsitz ab. Hierdurch wird die Verbindung zwischen dem Federbalg 5 und dem geplatzten Federbalg 3 großquerschnittig geöffnet, d. h. daß der Federbalg 5 seinen Druck über den geplatzten Federbalg 3 abbaut, wenn der Druck von 1 bar im Druckraum 77 unterschritten wird. Analoges gilt für den Fall des Platzens des Federbalges 5.

Das Überströmventil 53 ist im Gegensatz zur Ausführungsform nach Fig. 1 nur dann wirksam, wenn in einer der Leitungen 67 bzw. 69 ein Schaltdruck unterhalb von 1 bar erreicht ist. Oberhalb dieses Schaltdruckes bleibt das Überströmventil infolge des Fehlens eines Druckdifferenzverhaltens inaktiv, also selbst dann, wenn zwischen den Leitungen 67 und 69 bzw. den Federbälgen 3 und 5 ein relativ hoher Druckunterschied bestehen sollte.

Im Rahmen des der Erfindung eigenen Gedankens ist es auch möglich, zusätzlich zum Überströmventil 53, d. h. in Parallelschaltung dazu, ein Überströmventil 79 von an sich bekannter Wirkungsweise vorzusehen (Fig. 2). In diesem Fall übernimmt das Überströmventil 79 die Aufgabe, einen Druckausgleich zwischen den Federbälgen herbeizuführen, wenn z. B. eine Druckdifferenz von mehr als 1,5 bar bestehen sollte. Unterhalb eines Druckes von z. B. 1 bar, vorzugsweise beim Platzen eines der Federbälge übernimmt das Überströmventil 53 die Aufgabe, die beiden Federbälge 3 und 5 miteinander zu verbinden, um einen vollständigen Druckausgleich herbeizuführen.

Kurzfassung:

Bei einer Gasfederung für Fahrzeuge, insbesondere für Schienenfahrzeuge, ist ein doppeltwirkendes Überströmventil (1; 53) in der Verbindung zwischen zwei quer zur Fahrzeuglängsrichtung zwischen Fahrzeugaufbau und Laufwerk angeordneten Federbälgen (3, 5) vorgesehen und trägt bei Absinken des Druckes in einem der Federbälge (3, 5) unterhalb eines vorherbestimmbaren Druckwertes dazu bei, daß die beiden Federbälge miteinander verbunden werden und vorzugsweise ein intakter Federbalg durch den anderen, geplatzten Federbalg hindurch entlüftet werden kann. Das Überströmventil (1; 53) ist entweder mit zwei oberhalb eines vorherbestimmbaren Federbalgdruckes mit Differenzdruckverhalten gegeneinander arbeitenden Rückschlagventilen (11, 13) oder mit zwei druckentlasteten Sperrventilen (55, 57) versehen, wobei die Rückschlagventile bzw. die druckentlasteten Sperrventile unter der Einwirkung einer Federeinrichtung in eine geöffnete, die ständige Verbindung zwischen den Federbälgen (3, 5) herstellende Lage schaltbar sind, wenn der der Federeinrichtung entgegenwirkende Federbalgdruck des jeweiligen, einem Druckabfall unterliegenden Federbalges den vorherbestimmbaren Druckwert unterschreitet.

**Bezugszeichenliste**

1 Überströmventil
3 Federbalg
5 Federbalg
7 Leitung
9 Leitung
11 Rückschlagventil
13 Rückschlagventil
15 Druckraum
17 Druckraum
19 Druckraum
21 Druckraum
23 Druckfeder
25 Druckfeder
27 Ventilsitz
29 Ventilteller
31 Kolbenschaft
33 Kolben
35 Ventilsitz
37 Ventilteller
39 Kolbenschaft
41 Kolben
43 Feder
45 Anschlag
47 Anschlag
49 Anschlag
51 Anschlag
53 Überströmventil
55 Sperrventil
57 Sperrventil
59 Ventilkörper
61 Ventilkörper
63 Druckraum
65 Druckraum
67 Leitung
69 Leitung
71 Feder
73 Druckraum
75 Feder
77 Druckraum
79 Überströmventil

**Patentansprüche**

1. Gasfederung für Fahrzeuge, insbesondere Schienenfahrzeuge, mit einem Überströmventil, welches in der Verbindung zwischen wenigstens zwei quer zur Fahrzeuglängsrichtung angeordneten, zwischen Fahrwerk und Fahrzeugaufbau wirkenden Gasfedern in Form von Federbälgen angeordnet ist, dadurch gekennzeichnet, daß das Überströmventil (1) mit zwei einzelnen, gegeneinander arbeitenden Rückschlagventilen (11, 13; 55, 57) für die Überströmfunktion versehen ist und daß eine zusätzliche, bei Erreichen eines unteren Schaltdruckes eines der Federbälge (3, 5) die Verbindung zwischen den Federbälgen öffnende Einrichtung jeweils aus einer der Kraft der Druckfedern (23, 25; 71, 75) der Rückschlagventile (11, 13) entgegenwirkenden, federverspannten Stößeleinrichtung besteht, welche oberhalb des Schaltdruckes des einen Federbalges durch einen dem Federbalgdruck ausgesetzten Kolben (33, 41) in inaktiver Lage gehalten ist.

2. Gasfederung nach Anspruch 1, dadurch gekennzeichnet, daß der Kolben (33, 41) auf einer Seite von einer Feder (43) und auf der entgegengesetzten Seite vom Druck jeweils eines der Federbälge (3, 5) beaufschlagt ist, wobei der Druck gleichzeitig in Öffnungsrichtung (Überströmfunktion) gegenüber dem dem Kolben zugeordneten Rückschlagventil (11, 13) wirkt, und daß der Kolben (33, 41) einen dem Ventilteller (29, 37) des Rückschlagventils (11, 13) zugewandten, gleichfalls in Öffnungsrichtung des Rückschlagventils wirkenden Stößel trägt.

3. Gasfederung nach einem der vorangehenden Ansprüche, dadurch gekennzeichnet, daß das Überströmventil durch zwei baulich getrennt voneinander bestehende Rückschlagventile (11, 13) gebildet ist, welchen jeweils eine Einrichtung zur Verbindung der beiden Federbälge bei Erreichen eines unteren Schaltdruckes zugeordnet ist.

**Claims**

1. Gas suspension for vehicles, in particular rail vehicles, with an overflow valve which is located in the connection between at least two gas springs in the form of gas bellows, arranged transversally to the longitudinal axis of the vehicle and acting betweeen chassis and vehicle body, wherein the overflow valve (1), provided with two antagonist check valves (11, 13; 55, 57), ensures the overflow function and an additional appliance, consisting of a spring-loaded rod assembly, counteracting the force of the compression springs (23, 25; 71, 75) of the check valves (11, 13), opens the connection between the gas bellows as soon as the lower switching pressure of one of the gas bellows (3, 5) has been reached, said rod assembly being kept in an inactive position above the upper switching pressure of one of the gas bellows by a piston (33, 41), subjected to the gas bellow pressure.

2. Gas suspension according to Claim 1, wherein the piston (33, 41) is subjected on the one side to the force of the spring (43) and on the opposite side to the pressure of one of the gas bellows (3, 5), the pressure acting at the same time in the opening direction (overflow function), in relation to the check valve (11, 13) associated to the piston, said piston (33, 41) being provided with a rod facing the valve plate (29, 37) of the check valve (11, 13) and acting likewise in the opening direction of the check valve.

3. Gas suspension according to one of the aforementioned claims, wherein the overflow valve is constituted by two separately arranged check valves (11, 13), to each of which an appliance connecting the two gas bellows, as soon as the lower switching pressure has been reached, is associated.

**Revendications**

1. Suspension pneumatique pour des véhicules, en particulier pour des véhicules sur rails, comportant une soupape de trop-plein qui est disposé dans la liaison entre au moins deux ressorts pneumatiques en forme de soufflets montés transversalement à la direction longitudinale du véhicule, et agissant entre le bogie et châssis du véhicule, caractérisée par le fait que la soupape de trop-plein (1) est pourvue de deux soupapes de retenue individuelles (11, 13; 55, 57) opérant l'une contre l'autre pour la fonction de tropplein, qu'un dispositif supplémentaire qui établit la liaison entre les soufflets pneumatiques lorsqu'une pression de commutation basse est atteinte par l'un de ces soufflets, est constitué par un dispositif à poussoir qui agit à l'encontre de la force des ressorts de pression (23, 25; 71, 75) des soupapes de retenue (11, 13) et qui arme les ressorts, ledit dispositif à poussoir est maintenu dans une position inactive par un piston (33, 41) exposé à la pression du soufflet, dès que la pression de l'un des soufflets se situe au- delà de la pression de commutation.

2. Suspension pneumatique selon la revendication 1, caractérisé par le fait que le piston (33, 41) est chargé sur un côté par un ressort (43) et sur le côté opposé par la pression de l'un des soufflets (3, 5), ladite pression agissant en même temps et dans le sens de l'ouverture (fonction de trop-plein) par rapport à la soupape de retenue (11, 13) associée au piston, et que le piston (33, 41) porte un poussoir voisin du plateau de soupape (29, 37) de la soupape de retenue (11, 13) et agit aussi dans le sens de l'ouverture de la soupape de retenue.

3. Suspension pneumatique selon l'une des revendications précédentes, caractérisé par le fait que la soupape de trop-plein est constituée par deux soupapes de retenue (11, 13) séparées l'une de l'autre, et à chacune desquelles est associé un dispositif servant à relier les deux soufflets lorsque la pression de commutation inférieure est atteinte.

Fig. 1

Fig. 2